# EUROPÄISCHE PATENTSCHRIFT

(11) **EP 3 009 042 B1**
(45) Veröffentlichungstag und Bekanntmachung des Hinweises auf die Patenterteilung: **01.08.2018**
(21) Anmeldenummer: 15188283.4
(22) Anmeldetag: 05.10.2015
(51) Int. Cl.: A47B 88/95, F16B 12/46

(54) **VERBINDUNGSVORRICHTUNG FÜR EIN WANDELEMENT EINER SCHUBLADE SOWIE WANDSTRUKTUR UND MÖBEL**
CONNECTING DEVICE FOR A WALL ELEMENT OF A DRAWER AND WALL STRUCTURE AND FURNITURE
DISPOSITIF DE LIAISON POUR UNE STRUCTURE DE PAROI D'UN TIROIR ET STRUCTURE DE PAROI ET MEUBLE

(30) Priorität: 16.10.2014 DE 202014104930 U
(43) Veröffentlichungstag der Anmeldung: 20.04.2016
(73) Patentinhaber: Grass GmbH, 6973 Höchst (AT)
(72) Erfinder: Grabher, Günter, 6972 Fußach (AT); Amann, Jürgen, 6890 Lustenau (AT); Albrecht, Cornelius, 6883 Au (AT)
(74) Vertreter: Otten, Roth, Dobler & Partner mbB Patentanwälte

(56) Entgegenhaltungen:
- EP-A1- 1 516 561
- WO-A1-2012/068604
- WO-A2-2007/137311
- DE-U1-202009 004 982

## Beschreibung

Die Erfindung betrifft eine Verbindungsvorrichtung für ein Wandelement einer Schublade sowie eine Wandstruktur und ein Möbel. Auf dem Gebiet des Möbelbaus sind Verbindungsvorrichtungen für ein Wandelelement einer Schublade in verschiedensten Ausführungen bekannt, wie zum Beispiel aus EP 1 516 561 A1. Üblicherweise ist eine Schublade von zwei Seitenwänden, einer Rückwand und einer Frontblende seitlich begrenzt, wobei ein Schubladenboden an zum Beispiel zwei, drei oder z.B. vier Wandteilen einer Schublade angebracht sein kann. Ein Wandteil kann dabei in Form einer Wandstruktur aus mehreren Wandelementen aufgebaut sein. Zur Anbringung des Wandelements kann ein Anschlagelement vorgesehen sein, das ein Teil der Schublade und insbesondere ein Teil der Wandstruktur ist.

Der Erfindung liegt die Aufgabe zugrunde, eine Verbindungsvorrichtung für ein Wandelement einer Schublade bereitzustellen, die eine vergleichsweise einfache Montage eines Wandelements ermöglicht.

Die Aufgabe wird durch eine Verbindungsvorrichtung mit den Merkmalen des Anspruchs 1 gelöst.

Vorteilhafte und bevorzugte Ausführungen der Erfindung sind in den Unteransprüchen angegeben.

Die Erfindung geht von einer Verbindungsvorrichtung für ein Wandelement einer Schublade aus, das zur Anordnung zwischen einer schmalen in eine horizontale Längsrichtung des Wandelements weisende Stirnseite des Wandelements und einem Anschlagelement der Schublade vorgesehen ist.
Der Kern der Erfindung besteht darin, dass an einem Grundkörper der Verbindungsvorrichtung mindestens ein Federelement angebracht ist, wobei das Federelement eine gegenüber dem Grundkörper elastisch bewegliche Stützstelle aufweist, die zum Abstützen der Verbindungsvorrichtung an der Stirnseite des Wandelements vorgesehen ist, um das Verbindungselement zwischen dem Anschlagelement der Schublade und der Stirnseite des Wandelements einzuspannen. Die Verbindungsvorrichtung ist dabei mit dem Federelement an der Stirnseite des Wandelements abgestützt, wobei die Federelemente derart gespannt sein können, dass die Verbindungsvorrichtung, zum Beispiel reibkraftschlüssig an das Anschlagelement angedrückt ist. Dabei kann eine Andruckkraft, mit der die Verbindungsvorrichtung am Anschlagelement anliegt, ausreichend sein, um vorteilhaft eine stabile Anbringung des Wandelements zu gewährleisten. Falls das Anschlagelement zum Beispiel eine Innenseite eines angrenzenden Wandteils der Schublade ist, kann die Verbindungsvorrichtung durch eine Andruckkraft des Federelements gegebenenfalls dicht und fugenfrei an einer Oberfläche eines angrenzenden Wandteils der Schublade anliegen. Außerdem ermöglicht eine erfindungsgemäße Verbindungsvorrichtung vorteilhaft eine werkzeuglose Montage eines Wandelements.

Das Federelement ist an der Stützstelle vorzugsweise so geformt, dass eine Abstützung an einer Stirnseite mit beliebiger Form gewährleistet ist. Beispielsweise kann das Federelement an der Stützstelle - zumindest annähernd - mit einer Breite der Stirnseite des Wandelements oder z.B. mit einer mittleren Breite zwischen zwei Hauptflächen des Wandelements ausgebildet sein.

In der vorliegenden Beschreibung und in den Ansprüchen sind Angaben zu Positionen und zu Orientierungen - sofern nicht ausdrücklich ein anderes Bezugssystem angegeben ist - auf eine Anordnung der Vorrichtungsteile an einem fertig montierten und einsatzbereiten Möbel bezogen. Das heißt, das Wandelement ist entlang, insbesondere parallel zu einer Seitenkante eines Schubladenbodens und von letzterem aufrecht - z.B. senkrecht - stehend zwischen einer Frontblende und einer Rückwand oder auch zwischen zwei Seitenwänden an der Front- oder Rückseite angeordnet.

Das Anschlagelement kann eine Innenseite einer Frontblende oder einer Rückwand oder zum Beispiel einer Trägerkonsole an einem zweiten darunter angeordneten Wandelement zum Beispiel an einer Seitenwandbasis sein, wobei die Trägerkonsole insbesondere zur Anbringung des Wandelements am zweiten Wandelement vorgesehen ist. Das zweite Wandelement kann z.B. ein Zargenkörper sein, der insbesondere zur Anbringung einer Führungseinheit, insbesondere einer Auszugsschiene einer Auszugsführung ausgebildet ist. Des Weiteren kann das Anschlagelement eine Verbindungseinrichtung sein, die zur Verbindung von mehreren, insbesondere zwei oder z.B. drei Schubladenteilen vorgesehen ist. Beispielsweise kann die Verbindungseinrichtung ein Eckteil sein, mit dem sich zwei aufeinanderstoßende Wandelemente miteinander und gegebenenfalls mit einem Schubladenboden verbinden und insbesondere aneinander anbringen lassen.

Am Grundkörper können mehrere Federelemente ausgebildet sein, damit die Verbindungsvorrichtung beispielweise mit mehreren Stützstellen über eine gesamte Höhe an einer Stirnseite des Wandelements abgestützt und vorteilhaft gleichmäßig gegen das Anschlagelement angedrückt sein kann. Hierdurch lassen sich Schlitze und Fugen verringern und gegebenenfalls vermeiden, um einen Stauraum der Schublade gegen ein Eindringen von Staub und Feuchtigkeit vorteilhaft abzudichten.

Eine bevorzugte Ausführung der Erfindung besteht darin, dass am Grundkörper erste Verriegelungsmittel ausgebildet sind, die an zweite Verriegelungsmittel am Anschlagelement der Schublade angepasst sind. Die Verriegelungsmittel können zum Beispiel einen Riegelvorsprung und/oder eine Ausnehmung für einen Riegeleingriff umfassen. Dabei kann z.B. jeweils ein Element der Verriegelungsmittel am Grundkörper auf ein entsprechendes Gegenelement der Verriegelungsmittel am Anschlagelement abgestimmt sein. Es können auf mehrere insbesondere gleiche Elemente der Verriegelungsmittel am Grundkörper derart ausgebildet und auf das Anschlagelement abgestimmt sein, dass sich die Verbindungsvorrichtung und insbesondere auch das Wandelement in mehreren verschiedenen Positionen anbringen lassen. Die Verriegelungsmittel der erfindungsgemäßen Verbindungsvorrichtung sind vorzugsweise in Eingriff, wenn der Grundkörper vom Federelement in einer an das Anschlagelement gedrückten Stellung befindet.

Des Weiteren ist es bevorzugt, dass zumindest ein Teil der ersten Verriegelungsmittel und zumindest ein Teil der zweiten Verriegelungsmittel derart ausgebildet sind, dass die entsprechenden ersten und zweiten Verriegelungsmittel durch eine Kraft des Federelements in eine einander verriegelnde Stellung bewegbar sind. Dadurch lassen sich die ersten Verriegelungsmittel selbsttätig in die zweiten Verriegelungsmittel einschieben und halten, wenn die Verbindungsvorrichtung in eine geeignete Stellung zum Anschlagelement versetzt ist. Durch ein formschlüssiges Ineinandergreifen der Verriegelungsmittel, dass durch ein Federelement oder eine Vielzahl von Federelementen unterstützt ist, ist eine vergleichsweise einfach handhabbare werkzeuglose Montage erreichbar. Eine Verriegelung durch die Verriegelungsmittel kann einen seitlichen und/oder einen vertikalen Bewegungsspielraum des Wandelements gegenüber dem Anschlagelement verringern oder gänzlich vermeiden.

Der Grundkörper kann zumindest einen Halteabschnitt aufweisen, der zum Anliegen an einer Seite des Wandelements, die an die Stirnseite angrenzt, vorgesehen ist, wenn die Stützstelle des Federelements die Stirnseite des Wandelements berührt. Dabei kann das Wandelement z.B. zwischen dem Halteabschnitt und einem Abschnitt des Anschlagelements angeordnet sein, um z.B. an beiden anzuliegen. Vorzugsweise liegt der Halteabschnitt an einem Abschnitt, insbesondere einem Randabschnitt einer Hauptfläche des Wandelements an. Von der Hauptfläche kann der Stauraum der Schublade begrenzt sein. Die Hauptfläche kann außerdem einen Teil einer Außenfläche der Schublade bilden.

Des Weiteren ist es bevorzugt, dass ein Halteabschnitt am Grundkörper derart angeordnet ist, dass der Halteabschnitt an einer Wandfläche des Wandelements anliegen kann. Der Halteabschnitt kann dabei zum Beispiel flächig oder zum Beispiel fugenfrei mit einer Abdichtkante oder einem Abdichtsims, einem Abdichtabsatz oder einem Abdichtwulst anliegen. Die Wandfläche des Wandelements ist eine große zum Beispiel ebene Hauptwandfläche und kann eine Innen- oder eine Außenwandfläche sein.

Wenn das Wandelement eine Gitterstruktur hat, können eine innere und eine äußere Berührungsebene zum Beispiel der Gitterstäbe als Wandflächen betrachtet werden.

Ein Halteabschnitt kann außerdem am Grundkörper derart angeordnet sein, dass der Halteabschnitt an einer Schmalseite des Wandelements anliegen kann. Die Schmalseite kann dabei eine Oberseite bzw. eine Unterseite des Wandelements sein. Der Halteabschnitt kann zum Beispiel flächig und insbesondere fugenfrei mit einer Kante an der Schmalseite anliegen.

Am Grundkörper können zwei Halteabschnitte in einem Abstand derart angeordnet sein, dass das Wandelement zwischen den beiden Halteabschnitten positionierbar ist. Beispielsweise können die Halteabschnitte am Grundkörper gabelförmig über das Federelement hinaus reichen. Vorzugsweise sind die Halteabschnitte parallel zueinander angeordnet, wobei vorzugsweise beide Halteabschnitte am Wandelement anliegen.

Ein Anschlagabschnitt am Grundkörper kann an eine Innenseite einer Frontblende und/oder einer Rückwand derart angepasst sein, dass der Grundkörper bei Einwirkung einer Kraft des Federelements an der Innenseite gleichmäßig, insbesondere fugenfrei bzw. dicht anliegen kann. Wenn z.B. eine Innenseite einer z.B. Frontblende eben und insbesondere glatt ist, ist vorzugsweise der Anschlagabschnitt am Grundkörper ebenfalls eben und insbesondere glatt ausgebildet.

Außerdem umfasst der Grundkörper ein Hohlprofilabschnitt. Erfindungsgemäß ist der Hohlprofilabschnitt derart geformt, dass das Wandelement teilweise in den Hohlraum des Hohlraumprofilabschnitts einführbar ist.

Die Idee der erfindungsgemäßen Verbindungsvorrichtung lässt sich zu einer Wandstruktur weiter entwickeln, die ein Wandelement und mindestens ein erfindungsgemäßes Verbindungselement umfasst. Dabei kann die Wandstruktur ein Basiselement umfassen, auf dem das Wandelement und die Verbindungsvorrichtung anbringbar sind. Hierfür kann am Basiselement zum Beispiel mindestens eine Trägerkonsole aufragend angebracht sein, die insbesondere als Anschlag für die Verbindungsvorrichtung vorgesehen ist.

Mit der erfindungsgemäßen Verbindungsvorrichtung und gegebenenfalls einer erfindungsgemäßen Wandstruktur lassen sich ein Möbel und insbesondere eine Schublade eines Möbels vergleichsweise schnell und einfach herstellen.

### Figurenbeschreibung

Nachfolgend wird anhand eines Ausführungsbeispiels die Erfindung erläutert und mit Hilfe der Zeichnungen näher beschrieben. Das Ausführungsbeispiel ist in den Zeichnungen schematisch und unmaßstäblich dargestellt. Es zeigen:
- Figur 1a: eine schematische perspektivische Schrägansicht einer erfindungsgemäßen Verbindungsvorrichtung,
- Figur 1b: eine schematische Seitenansicht einer Einschubseite der Verbindungsvorrichtung,
- Figur 1c: eine schematische seitliche Schnittansicht eines vertikalen Längsschnitts der Verbindungsvorrichtung,
- Figur 2a: eine schematische Seitenansicht eines Halterungsabschnitts,
- Figur 2b: eine schematische seitliche Schnittansicht einer zweiten Ausführung einer erfindungsgemäßen Verbindungsvorrichtung,
- Figur 2c: eine Seitenansicht eines Wandelements,
- Figur 3: eine halbtransparente Seitenansicht schematisch der zweiten Verbindungsvorrichtung im montierten Zustand,
- Figur 4: eine schematische halbtransparente Seitenansicht einer Trägerkonsole mit montierter erster Verbindungsvorrichtung und einem Wandelement,
- Figur 5: eine schematische halbtransparente Seitenansicht einer Schublade mit einer ersten Verbindungsvorrichtung.

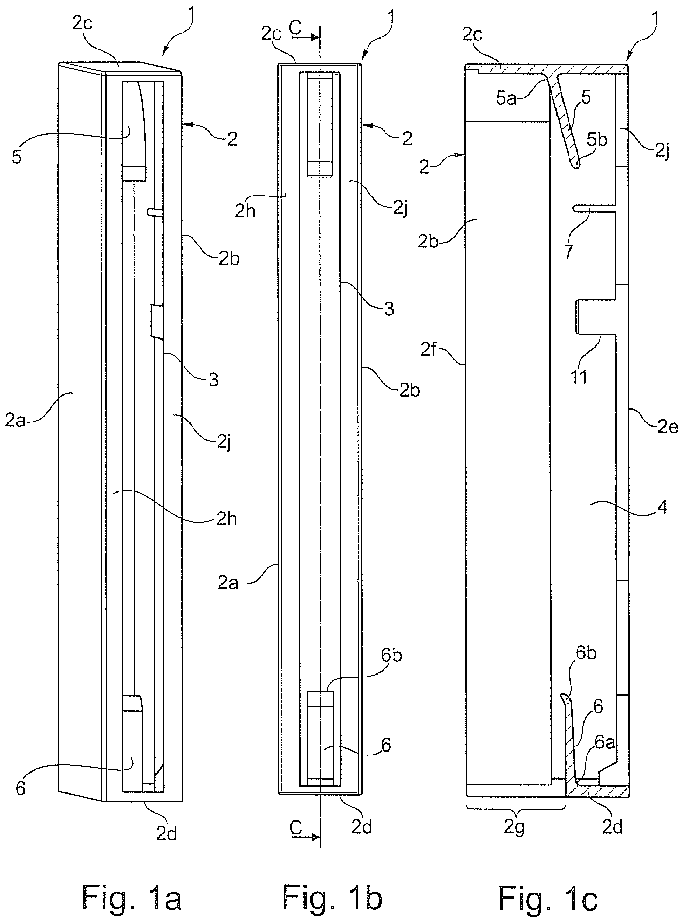

In den Figuren 1a bis 1c, 4 und 5 ist ein erstes Ausführungsbeispiel einer erfindungsgemäßen Verbindungsvorrichtung 1 gezeigt. Die Verbindungsvorrichtung 1 weist einen quaderförmigen Grundkörper 2 auf, der in der Art eines Hohlprofils einen linken und rechten Seitenwandabschnitt 2a und 2b, einen oberen Wandabschnitt 2c und einen unteren Wandabschnitt 2d aufweist. An der Unterseite ist der Grundkörper von einer ersten Stirnseite ausgehend durch unteren Wandabschnitt 2d nur teilweise abgeschlossen, wodurch an der Unterseite des Grundkörpers 2 eine Öffnung 2g ausgebildet ist, die seitlich von den Wandabschnitten 2a und 2b begrenzt ist. Die Wandabschnitte 2a, 2b und 2c sind dagegen zwischen der ersten Stirnseite 2e und einer zweiten Stirnseite 2f durchgehend geschlossen ausgebildet. An den Stirnseiten 2e und 2f ist der Grundkörper geöffnet ausgebildet.

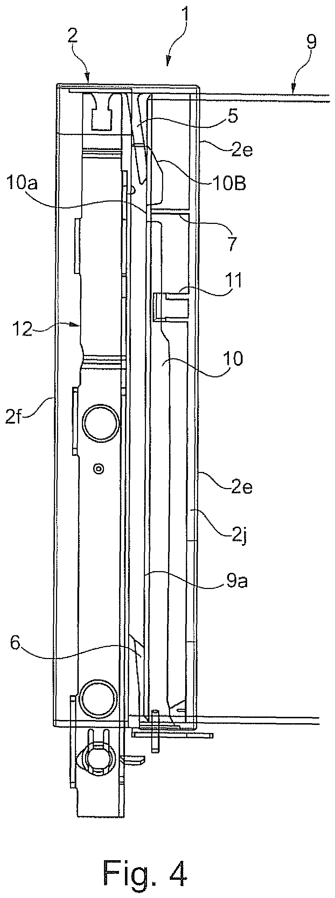

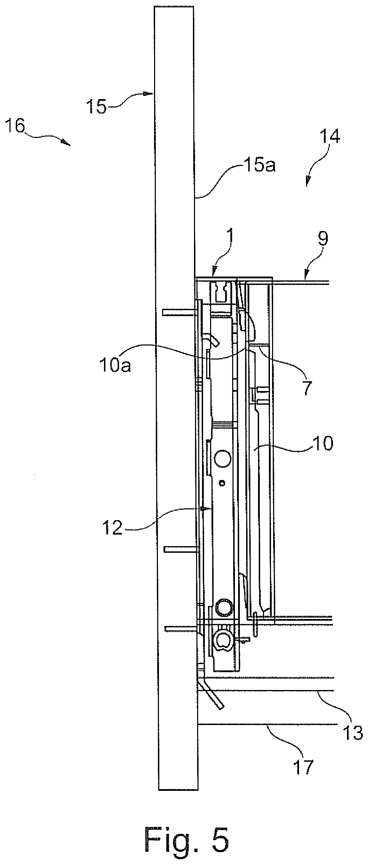

An der Stirnseite 2e ist eine Einschuböffnung 3 ausgebildet, wobei von den seitlichen Wandabschnitten 2a und 2b rechtwinklig abstehend Randvorsprünge 2h und 2j aufeinander zulaufend ausgebildet sind, mit denen die Einschuböffnung 3 verengt ist. Damit ist die Einschuböffnung 3 an einem Querschnitt eines Wandelements 9 angepasst (siehe Figuren 4 und 5). Ein Bereich des hohlprofilförmigen Grundkörpers 2, der durch den unteren Wandabschnitt 2d abgedeckt ist, ist dabei als Aufnahmeschacht 4 für das Wandelement 9 vorgesehen.

Innerhalb der Wandelemente 2a bis 2d ragt vom Wandelement 2c an der Oberseite ein zungenförmiges Federelement 5 in den Aufnahmeschacht 4 der Verbindungsvorrichtung 1 hinein. Dabei ist das Federelement 5 an einem Ende ortsfest am Grundkörper, insbesondere am oberen Wandelement 2c befestigt, wobei es einstückig mit dem Grundkörper 2 ausgebildet sein kann. Ein freistehender Endabschnitt 5b des Federelements 5 ist in Richtung der Stirnseite 2e hervorstehend ausgebildet. Der Endabschnitt 5b ist als Stützstelle des Federelements 5 vorgesehen, der sich elastisch in Richtung der Stirnseite 2f in den Grundkörper 2 hineindrücken lässt.

Am unteren Wandabschnitt 2d ist ein Anschlagabschnitt 6 ausgebildet, der vom Wandabschnitt 2d abstehend in den Schachtbereich 4 hinein reicht. Der Anschlagabschnitt 6 ist an einem Endabschnitt 6a am unteren Wandabschnitt 2d angebracht und vorzugsweise mit dem unteren Wandabschnitt 2d einstückig ausgebildet. Ein oberer Endabschnitt 6b des Anschlagabschnitts 6 kann freistehend ausgebildet und insbesondere elastisch nachgiebig im Schachtbereich 4 angeordnet sein. Der Anschlagabschnitt 6 ist in einem größeren Abstand von der Stirnseite 2e gelegen als zumindest der Endabschnitt 5b des Federelements 5, wenn das Federelement 5 unbelastet ist. Der Anschlagabschnitt 6 begrenzt eine Tiefe, bis zu der ein Wandelement 9 - wie in den Figuren 4 und 5 gezeigt - in den Aufnahmeschacht 4 einführbar ist. Dadurch lässt sich mit dem Anschlagabschnitt 6 eine Beschädigung des Federelements 5 durch eine Verformung oder Abscheren vermeiden, wenn ein Wandelement 9 in den Aufnahmeschacht 4 eingeführt wird.

Die Verbindungsvorrichtung 1 weist einen Riegelvorsprung 7 auf, der an einer Innenseite des Wandabschnitts 2b des Grundkörpers 2 in den Aufnahmeschacht 4 hineinragend ausgebildet ist. Vorzugsweise reicht der Riegelvorsprung 7 in den Aufnahmeschacht 4 nicht über den Randvorsprung 2j in Richtung des gegenüberliegenden Wandabschnitts 2a hinaus, um ein Einführen des Wandelements 9 in den Aufnahmeschacht 4 nicht zu behindern. Der Riegelvorsprung 7 kann dabei mit dem Randvorsprung 2j verbunden sein, wobei eine bündig an den Randvorsprung 2j anschließende Breite des Riegelvorsprungs 7 ein Anliegen des Randvorsprungs 2j am Wandelement 9 stabilisiert. Der Randvorsprung 2j ist zusätzlich durch einen plattenförmig vorstehenden Absatz 11 stabilisiert, der ebenfalls zur Anlage am eingeführten Wandelement 9 vorgesehen ist und der vorzugsweise bündig mit dem Randvorsprung 2j bis zur Öffnung 3 in den Aufnahmeschacht 4 hineinragt.

In der Figur 4 ist das Wandelement 9 gezeigt, das mit der erfindungsgemäßen Verbindungsvorrichtung 1 an einer Anbringkonsole 12 angebracht ist. Die in der Figur 4 gezeigte Anordnung ist dabei ein Ausschnitt aus der in der Figur 5 gezeigten Schublade 16 mit einem Schubladenboden 17, mit einer Frontblende 15 und mit einer Seitenzarge 14. Dabei ist die Seitenzarge 14 aus dem Wandelement 9, der erfindungsgemäßen Verbindungsvorrichtung 1 und einer Basisschiene 13 mit der Anbringkonsole 12 zusammengesetzt.

Die Anbringkonsole 12 ist an der Basisschiene 13 insbesondere senkrecht aufragend befestigt. Die Anbringkonsole 12 ist vorzugsweise für eine Anbringung der Frontblende 15 an der Basisschiene 13 ausgebildet.

Des Weiteren ist die Anbringkonsole 12 zur Anbringung des Wandelements 9 an der Basisschiene 13 vorgesehen. Hierfür wird das Wandelement 9 mit einer vertikale Schmalseite 9a, die insbesondere als Stirnseite z.B. der Frontblende 15 zugewandt sein kann, durch die Öffnung 3 in den Aufnahmeschacht 4 des Grundkörpers 2 der Verbindungsvorrichtung eingesteckt. Die Öffnung 2g an der Unterseite des Grundkörpers 2 ist dafür ausgebildet, die Verbindungsvorrichtung 1 auf die Anbringkonsole 12 aufzustecken. Dadurch kann die Anbringkonsole 12 vorteilhaft von den Wandabschnitten 2a, 2b und 2c an entsprechenden Seiten eingehüllt und verdeckt sein. Mit der eingesteckten Anbringkonsole 12 ist wiederum die Verbindungsvorrichtung 1 in einer vom Schubladenboden 17 und von der Basisschiene 13 aufragenden Anordnung stabilisiert.

Beim Aufstecken der Verbindungsvorrichtung 1 auf die Anbringkonsole 12 kann die stirnseitige Schmalseite 9a des Wandelements 9 in den Aufnahmeschacht 4 gegen die Kraft des Federelements 5 eingeschoben werden, bis die Schmalseite 9a an den Anschlagabschnitt 6 stößt. Dadurch lässt sich der Riegelvorsprung 7 an einer Rampe 10b eines Halterungsabschnitts 10 vorbei bis zu einer Kerbe 10a absenken. Durch die Rampe 10b ist der Halterungsabschnitt 10 an dessen freistehendem Ende derart verjüngt, dass ein Aufstecken der Verbindungsvorrichtung 1 erleichtert ist. Indem man die Kraft des Federelements 5 frei wirken lässt, wenn der Riegelvorsprung 7 im Bereich der Kerbe 10a positioniert ist, ist die Verbindungsvorrichtung 1 und mit ihr das Wandelement 9 an am Halterungsabschnitt 10 der Anbringkonsole 12 gegen ein Abheben von der Basisschiene 13 verriegelbar. Dadurch kann die Verbindungsvorrichtung 1 als Höhensicherung für das Wandelement 9, das z.B. aus Glas bestehen kann, ausgebildet sein, mit der das Wandelement 9 vorteilhaft gegen ein Abheben bzw. Entfernen von der Schublade 16 (Fig. 5) in einer beliebigen Stellung - insbesondere eine den Boden nach oben gedrehte Stellung - gesichert ist. Der Halterungsabschnitt 10 der Anbringkonsole 12 ist dabei vorzugsweise zwischen dem Wandelement 9 und z.B. dem Wandabschnitt 2b des Grundkörpers 2 angeordnet. Das Wandelement 9 ist dadurch vorteilhaft von der Verbindungsvorrichtung 1 in der Art eines Bügels formschlüssig am Halterungsabschnitt 10 gegen seitliche Bewegungen bzw. seitliche Krafteinwirkungen gesichert.

Die Stirnseite 2f ist vorzugsweise eben ausgebildet, wodurch die Verbindungsvorrichtung 1 im Bereich der Wandelemente 2a, 2b und 2c dicht an der ebenen Innenfläche 15a der Frontblende 15 anliegen kann. Gemeinsam mit einer stabilen Anbringung des Wandelements 9 an der Seitenzarge 14 ist durch die Verbindungsvorrichtung 1 auch vorteilhaft eine licht- und schmutzdichte Überbrückung des Zwischenraums zwischen der Frontblende 15 und dem Wandelement 9 erreichbar.

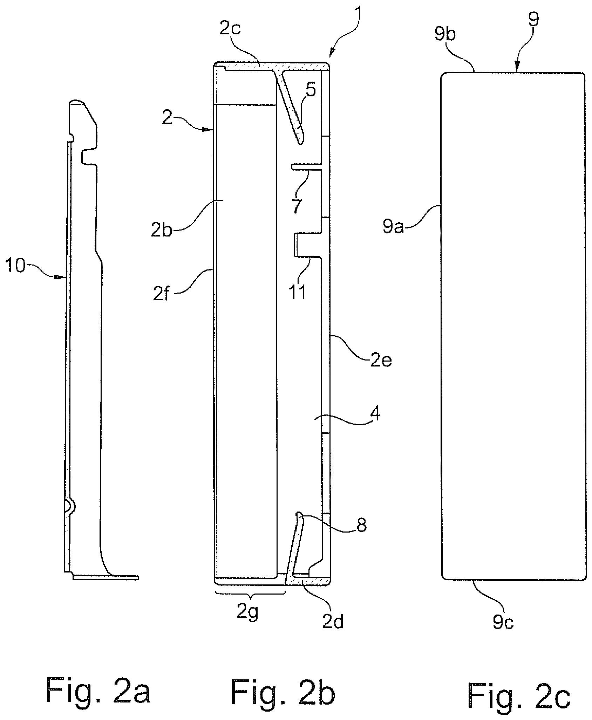

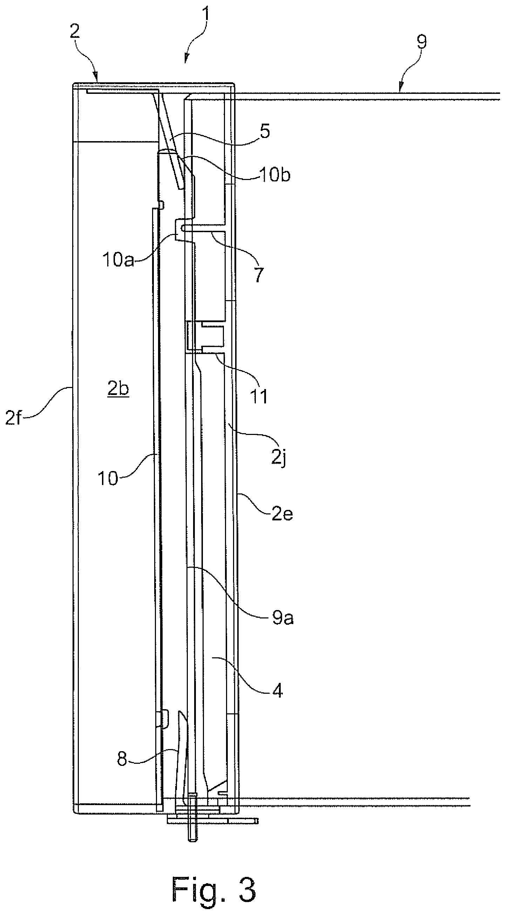

In den Figuren 2b und 3 ist ein zweites Ausführungsbeispiel einer erfindungsgemäßen Verbindungsvorrichtung 1 gezeigt. Die Figur 2a zeigt einen Halterungsabschnitt 10 und in der Figur 2c ist ein Wandelement 9 dargestellt, wobei die Verbindungsvorrichtung 1 zur Anbringung des Wandelements 9 am Halterungsabschnitt 10 vorgesehen ist. Die Verbindungsvorrichtung 1 weist größtenteils die gleichen Merkmale wie das in den Figuren 1a bis 1c gezeigte Ausführungsbeispiel auf. Daher wird nachfolgend vor allem auf Unterscheidungsmerkmale hingewiesen.

Der hohlprofilförmige Grundkörper 2 ist ebenfalls an einer Unterseite nur teilweise durch das Wandelement 2d geschlossen und weist ebenfalls eine Öffnung 2g auf, die von der Stirnseite 2f bis zum Wandelement 2d reicht. Zusätzlich zum Federelement 5, das mit dem oberen Wandelement 2c verbunden ist, weist die Anbringvorrichtung 1 ein zweites Federelement 8 auf, das am unteren Wandelement 2d befestigt und vorzugsweise einstückig mit diesem verbunden ist. Dies bietet den Vorteil, dass das eingeschobene Wandelement 9, wie es in der Figur 2c gezeigt ist, gleichmäßig in einem oberen und in einem unteren Bereich einer Schmalseite 9a abgestützt sein kann. Vorzugsweise ist ein Abstand der Innenseiten des oberen Wandelements 2c und des unteren Wandelements 2d auf den Abstand einer oberen Schmalseite 9b und einer unteren Schmalseite 9c des Wandelements 9 derart abgestimmt, dass sich das Wandelement 9 mit vergleichsweise kleinem vertikalem Bewegungsspiel und gegebenenfalls spielfrei in den Schachtbereich 4 durch die Öffnung 3 an der Stirnseite 2e des Grundkörpers 2 bis zur Berührung der Federelemente 5 und 8 einführen lässt. Die Öffnung 2g ist dazu vorgesehen, die Verbindungsvorrichtung 1 - gegebenenfalls mit eingeschobenem Wandelement 9 - am Halterungsabschnitt 10 aufzustecken.

Die erfindungsgemäße Verbindungsvorrichtung 1 kann in den hier gezeigten Ausführungen vorteilhaft einstückig z.B. aus Kunststoff insbesondere durch Spritzgießen hergestellt werden.

### Bezugszeichenliste:

- 1: Verbindungsvorrichtung
- 2: Grundkörper
- 2a: Wandabschnitt
- 2b: Wandabschnitt
- 2c: Wandabschnitt
- 2d: Wandabschnitt
- 2e: Stirnseite
- 2f: Stirnseite
- 2g: Öffnung
- 2h: Randvorsprung
- 2j: Randvorsprung
- 3: (Einschub-)Öffnung
- 4: Aufnahmeschacht
- 5: Federelement
- 5a: Stützstelle
- 5b: Endabschnitt
- 6: Anschlagabschnitt
- 6a: Endabschnitt
- 6b: Endabschnitt
- 7: Riegel
- 8: Federelement
- 9: Wandelement
- 9a: Schmalseite
- 9b: Schmalseite
- 9c: Schmalseite
- 10: Halterungselement
- 10a: Kerbe
- 10b: Rampe
- 11: Absatz
- 12: Anbringkonsole
- 13: Basisschiene
- 14: Seitenzarge
- 15: Frontblende
- 15a: Innenseite
- 16: Schublade
- 17: Schubladenboden

## Patentansprüche

1. Verbindungsvorrichtung (1) für ein Wandelement (9) einer Schublade (16), das zur Anordnung zwischen einer schmalen, in eine horizontale Längsrichtung des Wandelements (9) weisende Stirnseite (9a) des Wandelements (9) und einem Anschlagelement (10, 15) der Schublade (16) vorgesehen ist, wobei an einem Grundkörper (2) der Verbindungsvorrichtung (1) mindestens ein Federelement (5, 8) ortsfest angebracht ist, wobei das Federelement (5, 8) eine gegenüber dem Grundkörper (2) elastisch bewegliche Stützstelle aufweist, die zum Abstützen der Verbindungsvorrichtung (1) an der Stirnseite (9a) des Wandelements (9) vorgesehen ist, um die Verbindungsvorrichtung (1) zwischen dem Anschlagelement (10, 15) der Schublade (16) und der Stirnseite (9a) des Wandelements (9) einzuspannen, dass der quaderförmige Grundkörper (2) ein Hohlprofilabschnitt umfasst, welcher einen linken und einen rechten Seitenwandabschnitt (2a, 2b), einen oberen Wandabschnitt (2c), einen unteren Wandabschnitt (2d), eine erste Stirnseiten (2e) und eine zweite Stirnseiten (2f) ausweist, wobei der untere Wandabschnitt (2d) eine Öffnung (2g) ausweist, welche seitlich von den Seitenwandabschnitten (2a, 2b) begrenzt ist, wobei die Seitenwandabschnitte (2a, 2b) und der obere Wandabschnitt (2c) durchgehend geschlossen ausgebildet sind, wobei die Stirnseiten (2e, 2f) geöffnet ausgebildet sind, wobei die elastisch bewegliche Stützstelle in Richtung der ersten Stirnseite (2e) hervorstehend ausgebildet ist, wobei die Stützstelle sich elastisch in Richtung der zweiten Stirnseite (2f) des Hohlprofilabschnitts (2a -2f) in den Grundkörper hineindrücken lässt, wobei der Hohlprofilabschnitt (2a - 2f) derart geformt ist, dass das Wandelement teilweise in den Hohlraum des Hohlprofilabschnitts (2a - 2f) einführbar ist.

2. Verbindungsvorrichtung (1) nach Anspruch 1, **dadurch gekennzeichnet, dass** am Grundkörper (2) erste Verriegelungsmittel (7) ausgebildet sind, die an zweite Verriegelungsmittel (10a) am Anschlagelement (10, 15) der Schublade (16) angepasst sind.

3. Verbindungsvorrichtung (1) nach Anspruch 2, **dadurch gekennzeichnet, dass** zumindest ein Teil der ersten Verriegelungsmittel (7) und zumindest ein Teil der zweiten Verriegelungsmittel (10a) formschlüssig ineinandergreifen, wobei die entsprechenden ersten und zweiten Verriegelungsmittel (7, 10a) durch eine Kraft des Federelements (5, 8) in eine einander verriegelnde Stellung bewegbar sind.

4. Verbindungsvorrichtung (1) nach Anspruch 3, **dadurch gekennzeichnet, dass** der Teil der ersten Verriegelungsmittel (7) und der Teil der zweiten Verriegelungsmittel (10a) derart auf einander abgestimmt sind, dass in der verriegelten Stellung ein Entfernen des Wandelements (9) von der Schublade unterbunden ist.

5. Verbindungsvorrichtung (1) nach einem der vorgenannten Ansprüche, **dadurch gekennzeichnet, dass** der Grundkörper (2) zumindest einen Halteabschnitt (10) aufweist, der zum Anliegen an einer Seite des Wandelements (9), die an die Stirnseite (9a) angrenzt, vorgesehen ist, wenn die Stützstelle (5a) des Federelements (5, 8) die Stirnseite (9a) des Wandelements (9) berührt.

6. Verbindungsvorrichtung (1) nach Anspruch 5, **dadurch gekennzeichnet, dass** ein Halteabschnitt (2a, 2b, 2c, 2d) am Grundkörper (2) derart angeordnet ist, dass der Halteabschnitt (2a, 2b, 2c, 2d) an einer Wandfläche des Wandelements (9) anliegen kann.

7. Verbindungsvorrichtung (1) nach Anspruch 5 oder 6, **dadurch gekennzeichnet, dass** ein Halteabschnitt (2a - 2d) am Grundkörper (2) derart angeordnet ist, dass der Halteabschnitt (2a - 2d) an einer Schmalfläche (9a, 9b, 9c) des Wandelements anliegen kann.

8. Verbindungsvorrichtung (1) nach Anspruch 7, **dadurch gekennzeichnet, dass** am Grundkörper (2) zwei Halteabschnitte (2a - 2d) in einem Abstand derart angeordnet sind, dass das Wandelement (9) zwischen den beiden Halteabschnitten (2a - 2d) positionierbar ist.

9. Verbindungsvorrichtung (1) nach einem der vorgenannten Ansprüche, **dadurch gekennzeichnet, dass** am Grundkörper (2) ein Anschlagabschnitt (2f) an eine Innenseite (15a) einer Frontblende (15) und/oder einer Rückwand derart angepasst ist, dass der Grundkörper (2) bei Einwirkung einer Kraft des Federelements (5, 8) an der Innenseite (15a) gleichmäßig, insbesondere fugenfrei/dicht anliegen kann.

10. Wandstruktur (14) für eine Schublade (16) mit einem Wandelement (9) und mindestens einer Verbindungsvorrichtung (1) nach einem der vorgenannten Ansprüche.

11. Wandstruktur (14) nach Anspruch 10, **dadurch gekennzeichnet, dass** die Wandstruktur (14) ein Basiselement (13) umfasst, auf dem das Wandelement (9) und die Verbindungsvorrichtung (1) anbringbar sind.

12. Wandstruktur (14) nach einem der Ansprüche 10 - 11, **dadurch gekennzeichnet, dass** am Basiselement (13) mindestens eine Trägerkonsole (12) aufragend angebracht ist.

13. Möbel mit einer Verbindungsvorrichtung (1) nach einem der Ansprüche 1 - 9.

## Claims

1. Connecting device (1) for a wall element (9) of a drawer (16), which is provided for arranging between a narrow end face (9a) of the wall element (9) pointing in a horizontal longitudinal direction of the wall element (9) and a stop element (10, 15) of the drawer (16), wherein on a main body (2) of the connecting device (1) at least one spring element (5, 8) is attached in a fixed manner, wherein the spring element (5, 8) comprises a supporting point (5a) which can move elastically relative to the main body (2) which is provided for supporting the connecting device (1) on the end face (9a) of the wall element (9) in order to clamp the connecting device (1) between the stop element (10, 15) of the drawer (16) and the end face (9a) of the wall element (9), wherein the cuboid-shaped main body (2) has a hollow profile section which comprises a left and a right side wall section (2a, 2b), an upper wall section (2c), a lower wall section (2d), a first end face (2e) and a second end face (2f), wherein the lower wall section (2d) comprises an opening (2g) which is delimited laterally by the side wall sections (2a, 2b), wherein the side wall sections (2a, 2b) and the upper wall section (2c) are designed to be completely closed, wherein the end faces (2e, 2f) are designed to be open, wherein the elastically movable supporting point is designed to protrude in the direction of the first end face (2e), wherein the supporting point can be pushed elastically in the direction of the second end face (2f) of the hollow profile section (2a - 2f) into the main body, wherein the hollow profile section (2a -2f) is formed such that the wall element can be inserted partly into the hollow chamber of the hollow profile section (2a - 2f).

2. Connecting device (1) according to claim 1, **characterised in that** on the main body (2) first locking means (7) are formed which are adjusted to the second locking means (10a) on the stop element (10, 15) of the drawer (16).

3. Connecting device (1) according to claim 2, **characterised in that** at least a portion of the first locking means (7) and at least a portion of the second locking means (10a) engage with one another in a form-fitting manner, wherein the corresponding first and second locking means (7, 10a) can be moved by the force of the spring element (5, 8) into an interlocking position.

4. Connecting device (1) according to claim 3, **characterised in that** the portion of the first locking means (7) and the portion of the second locking means (10a) are adjusted to one another such that in the locked position it is impossible to remove the wall element (9) from the drawer.

5. Connecting device (1) according to any of the preceding claims, **characterised in that** the main body (2) comprises at least one holding section (10) which is provided for bearing on one side of the wall element (9), which adjoins the end face (9a), when the supporting point (5a) of the spring element (5, 8) contacts the end face (9a) of the wall element (9).

6. Connecting device (1) according to claim 5, **characterised in that** a holding section (2a, 2b, 2c, 2d) is arranged on the main body (2) such that the holding section (2a, 2b, 2c, 2d) can bear on a wall surface of the wall element (9).

7. Connecting device (1) according to claim 5 or 6, **characterised in that** a holding section (2a - 2d) is arranged on the main body (2) such that the holding section (2a - 2d) can bear on a narrow surface (9a, 9b, 9c) of the wall element.

8. Connecting device (1) according to claim 7, **characterised in that** on the main body (2) two holding sections (2a - 2d) are arranged at a distance from one another such that the wall element (9) can be positioned between the two holding sections (2a - 2d).

9. Connecting device (1) according to any of the preceding claims, **characterised in that** on the main body (2) a stop section (2f) is adjusted to an inner side (15a) of a front panel (15) and/or a rear wall such that the main body (2) under the effect of a force from the spring element (5, 8) can bear evenly on the inner side (15a), in particular can bear without a join/tightly.

10. Wall structure (14) for a drawer (16) comprising a wall element (9) and at least one connecting device (1) according to any of the preceding claims.

11. Wall structure (14) according to claim 10, **characterised in that** the wall structure (14) comprises a base element (13), onto which the wall element (9) and the connecting device (1) can be attached.

12. Wall structure (14) according to any of claims 10 -11, **characterised in that** on the base element (13) at least one support bracket (12) is attached extending upwards.

13. Piece of furniture comprising a connecting device (1) according to any of claims 1-9.

## Revendications

1. Dispositif de liaison (1) pour un élément de paroi (9) d'un tiroir (16), ***lequel dispositif*** est destiné à être disposé entre un élément de butée (10, 15) du tiroir (16) et une face frontale (9a) étroite de l'élément de paroi (9) qui est dirigée dans une direction longitudinale horizontale de l'élément de paroi (9), au moins un élément ressort (5, 8) étant monté de façon fixe sur un corps de base (2) du dispositif de liaison (1), l'élément ressort (5, 8) présentant un point d'appui mobile élastiquement par rapport au corps de base (2) et destiné à servir d'appui au dispositif de liaison (1) sur la face frontale (9a) de l'élément de paroi (9) en vue de serrer le dispositif de liaison (1) entre l'élément de butée (10, 15) du tiroir (16) et la face frontale (9a) de l'élément de paroi (9), le corps de base (2) parallélépipédique comprenant une partie profilée creuse qui présente une partie de paroi latérale gauche et une partie de paroi latérale droite (2a, 2b), une partie de paroi supérieure (2c), une partie de paroi inférieure (2d), une première face frontale (2e) et une deuxième face frontale (2f), la partie de paroi inférieure (2d) présentant une ouverture (2g) délimitée latéralement par les parties de paroi latérale (2a, 2b), les parties de paroi latérale (2a, 2b) et la partie de paroi supérieure (2c) étant fermées d'un bout à l'autre, les faces frontales (2e, 2f) étant ouvertes, le point d'appui mobile élastiquement étant formé de manière à saillir en direction de la première face frontale (2e), le point d'appui pouvant être enfoncé de manière élastique dans le corps de base en direction de la deuxième face frontale (2f) de la partie profilée creuse (2a-2f), la partie profilée creuse (2a-2f) étant formée de telle sorte que l'élément de paroi peut être introduit en partie dans la cavité de la partie profilée creuse (2a-2f).

2. Dispositif de liaison (1) selon la revendication 1, **caractérisé en ce que** des premiers moyens de verrouillage (7), adaptés à des deuxièmes moyens de verrouillage (10a) sur l'élément de butée (10, 15) du tiroir (16), sont formés sur le corps de base (2).

3. Dispositif de liaison (1) selon la revendication 2, **caractérisé en ce qu'au** moins une partie des premiers moyens de verrouillage (7) et au moins une partie des deuxièmes moyens de verrouillage (10a) s'imbriquent par coopération de formes, les premiers et deuxièmes moyens de verrouillage (7, 10a) correspondants pouvant être déplacés dans une position de verrouillage mutuel par une force de l'élément ressort (5, 8).

4. Dispositif de liaison (1) selon la revendication 3, **caractérisé en ce que** la partie des premiers moyens de verrouillage (7) et la partie des deuxièmes moyens de verrouillage (10a) sont adaptées l'une à l'autre de telle sorte que, dans la position verrouillée, il est impossible de retirer l'élément de paroi (9) du tiroir.

5. Dispositif de liaison (1) selon l'une des revendications précédentes, **caractérisé en ce que** le corps de base (2) présente au moins une partie de retenue (10), destinée à s'appliquer sur une face de l'élément de paroi (9) adjacente à la face frontale (9a) lorsque le point d'appui (5a) de l'élément ressort (5, 8) est en contact avec la face frontale (9a) de l'élément de paroi (9).

6. Dispositif de liaison (1) selon la revendication 5, **caractérisé en ce qu'une** partie de retenue (2a, 2b, 2c, 2d) est disposée sur le corps de base (2) de telle sorte que la partie de retenue (2a, 2b, 2c, 2d) peut s'appliquer sur une surface de paroi de l'élément de paroi (9).

7. Dispositif de liaison (1) selon la revendication 5 ou 6, **caractérisé en ce qu'**une partie de retenue (2a-2d) est disposée sur le corps de base (2) de telle sorte que la partie de retenue (2a-2d) peut s'appliquer sur une surface étroite (9a, 9b, 9c) de l'élément de paroi.

8. Dispositif de liaison (1) selon la revendication 7, **caractérisé en ce que** deux parties de retenue (2a-2d) sont disposées sur le corps de base (2) à distance l'une de l'autre de telle sorte que l'élément de paroi (9) peut être positionné entre les deux parties de retenue (2a-2d).

9. Dispositif de liaison (1) selon l'une des revendications précédentes, **caractérisé en ce qu'**une partie de butée (2f) sur le corps de base (2) est adaptée à une face intérieure (15a) d'un panneau de façade (15) et/ou à une paroi arrière, de telle sorte que le corps de base (2), lorsque l'élément ressort (5, 8) exerce une force, peut s'appliquer sur la face intérieure (15a) de façon uniforme, en particulier sans jointures/de manière serrée.

10. Structure de paroi (14) pour un tiroir (16) comprenant un élément de paroi (9) et au moins un dispositif de liaison (1) selon l'une des revendications précédentes.

11. Structure de paroi (14) selon la revendication 10, **caractérisée en ce que** la structure de paroi (14) comprend un élément de base (13) sur lequel peuvent être montés l'élément de paroi (9) et le dispositif de liaison (1).

12. Structure de paroi (14) selon l'une des revendications 10 à 11, **caractérisée en ce qu'**au moins une console support (12) est montée en saillie sur l'élément de base (13).

13. Meuble comprenant un dispositif de liaison (1) selon l'une des revendications 1 à 9.
